# EUROPEAN PATENT APPLICATION

(11) **EP 1 783 018 A1**
(43) Date of publication of application: **09.05.2007**
(21) Application number: 05356196.5
(22) Date of filing: 04.11.2005
(51) Int. Cl.: B60T 8/32, B62L 3/02, B62K 19/30

(54) **Front frame assembly for a motorcycle**

(71) Applicant: Kwang Yang Motor Co., Ltd., Kaohsiung (TW)
(72) Inventor: Chen, Yu-Kun, Kaohsiung (TW)
(74) Representative: Maureau, Philippe

(57) **Abstract**

A front frame assembly (5) for a motorcycle includes two shock absorbers (52) flanking a front wheel (51), and a bridge (54) having two opposite lateral sides connected respectively to the shock absorbers (52), and opposite front and rear sides (541, 542). Two disk brakes (53) are disposed respectively behind the shock absorbers (52), and are controlled by a brake controller (57) disposed on a grip member (55). A brake oil tube device includes a three-way connector (60) disposed fixedly on the rear side (542) of the bridge (54), a first oil tube (61) interconnecting the brake controller (57) and the three-way connector (60), a second oil tube (62) interconnecting the three-way connector (60) and one of the disk brakes (53), and a third oil tube (63) interconnecting the three-way connector (60) and the other one of the disk brakes (53).

## Description

This invention relates to a motorcycle, and more particularly to a front frame assembly for a motorcycle, which includes two disk brakes disposed respectively on two opposite sides of a front wheel.

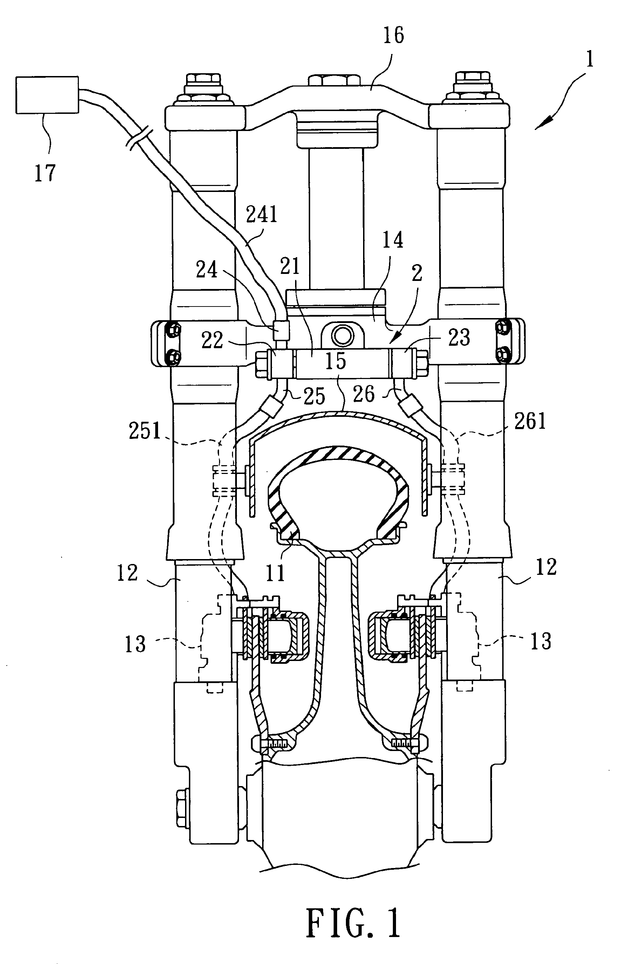

Referring to Fig. 1, a conventional front frame assembly 1 for a motorcycle includes a brake oil tube device 2, a front wheel 11, two shock absorbers 12 flanking the front wheel 11, two disk brakes 13 disposed respectively behind the shock absorbers 12, a bridge 14 having two opposite lateral sides connected respectively to the shock absorbers 12, a fender 15 disposed between the shock absorbers 12 and between the bridge 14 and the front wheel 11, a grip member 16 connected fixedly to the bridge 14, and a brake controller 17 disposed on the grip member 16.

The brake oil tube device 2 includes a rigid horizontal oil tube 21 disposed on a front side of the bridge 14, a three-way connector 22 mounted fixedly to and in fluid communication with one end of the horizontal oil tube 21, and a two-way connector 22 mounted fixedly to and in fluid communication with the other end of the horizontal oil tube 21. The three-way connector 22 has an upper connecting tube portion 24 and a lower connecting tube portion 25. The two-way connector 22 has a lower connecting tube portion 26. The brake oil tube device 2 further includes flexible first, second, and third oil tubes 241, 251, 261. The first oil tube 241 interconnects the brake controller 17 and the upper connecting tube portion 24 of the three-way connector 22. The second oil tube 251 interconnects the lower connecting tube portion 25 of the three-way connector 22 and one of the disk brakes 13. The third oil tube 261 interconnects the lower connecting tube portion 26 of the two-way connector 22 and the other one of the disk brakes 13. As such, the brake controller 17 is operable to force brake oil to flow from the first oil tube 241 into the disk brakes 13.

The front frame assembly 1 suffers from the following disadvantages:
(A) Because the horizontal oil tube 21 is attached to the front side of the bridge 14, and because the disk brakes 13 are disposed behind the shock absorbers 12, it is difficult to install the first, second, and third oil tubes 241, 251, 261, and the first, second, and third oil tubes 241, 251, 261 are relatively long. As a result, the manufacturing cost of the front frame assembly 1 is increased.
(B) The structure of the brake oil tube device 2 is complicated.

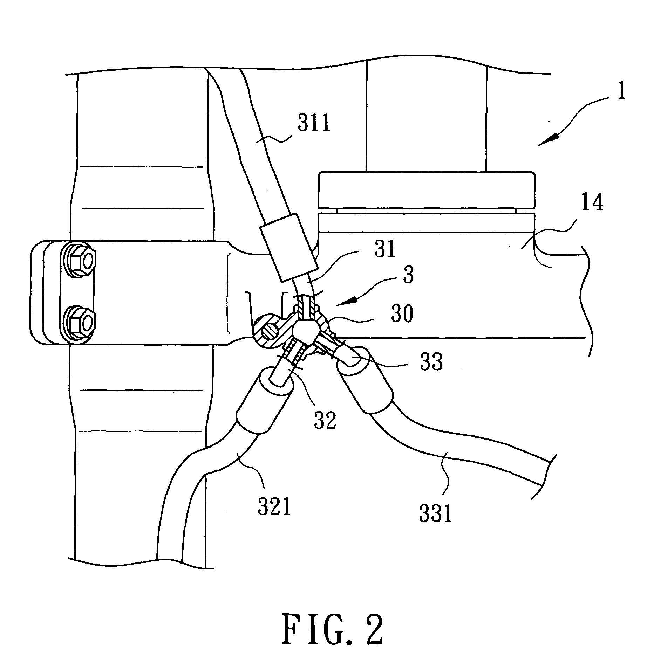

Referring to Fig. 2, another conventional front frame assembly 1 of a motorcycle has an improved brake oil tube device 2, which includes a three-way connector 30 having three connecting tube portions 31, 32, 33, and first, second, and third oil tubes 311, 321, 331 connected respectively to the connecting tube portions 31, 32, 33. Although the brake oil tube device 3 has a simplified structure, it has not yet overcome the disadvantage (A).

Therefore, the object of this invention is to provide a front frame assembly for a motorcycle, which can overcome the above-mentioned disadvantages associated with the prior art.

According to this invention, a front frame assembly for a motorcycle including:
a front wheel;
two shock absorbers flanking the front wheel;
a handle unit including a bridge and a grip member disposed above and connected fixedly to the bridge, the bridge having two opposite lateral sides connected respectively to the shock absorbers, and opposite front and rear sides;
a braking unit including a brake controller disposed on the grip member, and two disk brakes disposed respectively behind the shock absorbers and controlled by the brake controller; and
a brake oil tube device including a three-way connector disposed fixedly on the bridge, a first oil tube interconnecting the brake controller and the three-way connector, a second oil tube interconnecting the three-way connector and one of the disk brakes, and a third oil tube interconnecting the three-way connector and the other one of the disk brakes;
characterized in that the three-way connector is attached to the rear side of the bridge.

Because the three-way connector and the disk brakes are disposed behind the shock absorbers, the second and third oil tubes can be mounted easily between the three-way connector and the disk brakes.

These and other features and advantages of this invention will become apparent in the following detailed description of the preferred embodiments of this invention, with reference to the accompanying drawings, in which:
Fig. 1 is a partly sectional, fragmentary schematic front view of a conventional front frame assembly for a motorcycle;
Fig. 2 is a partly sectional, fragmentary front side view of another conventional front frame assembly for a motorcycle, which includes an improved oil tube device;
Fig. 3 is a fragmentary perspective view of a motorcycle including the first preferred embodiment of a front frame assembly according to this invention;
Fig. 4 is a fragmentary rear side of the first preferred embodiment; and
Fig. 5 is a fragmentary perspective view of a motorcycle including the second preferred embodiment of a front frame assembly according to this invention.

Before the present invention is described in greater detail in connection with the preferred embodiments, it should be noted that similar elements and structures are designated by like reference numerals throughout the entire disclosure.

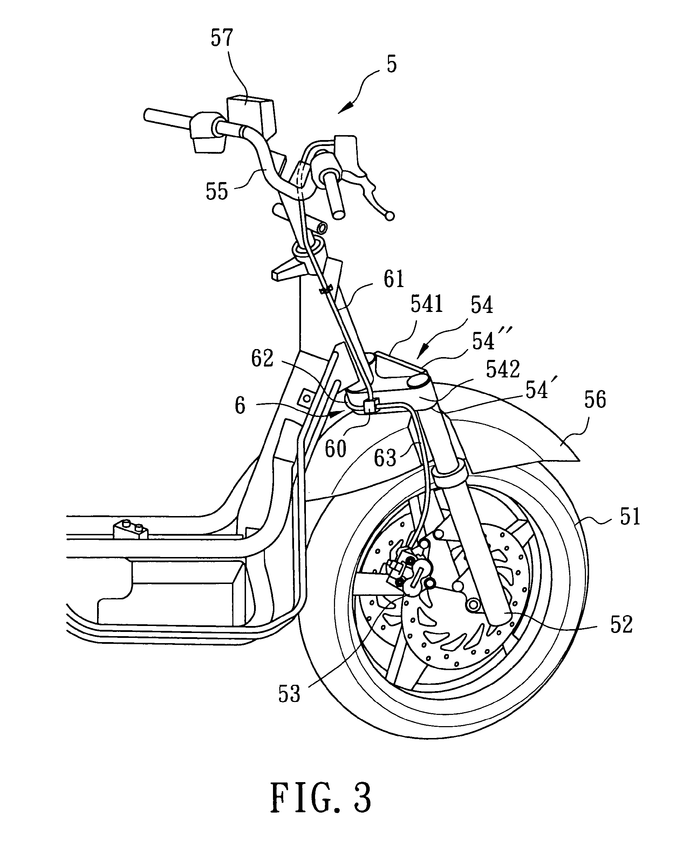

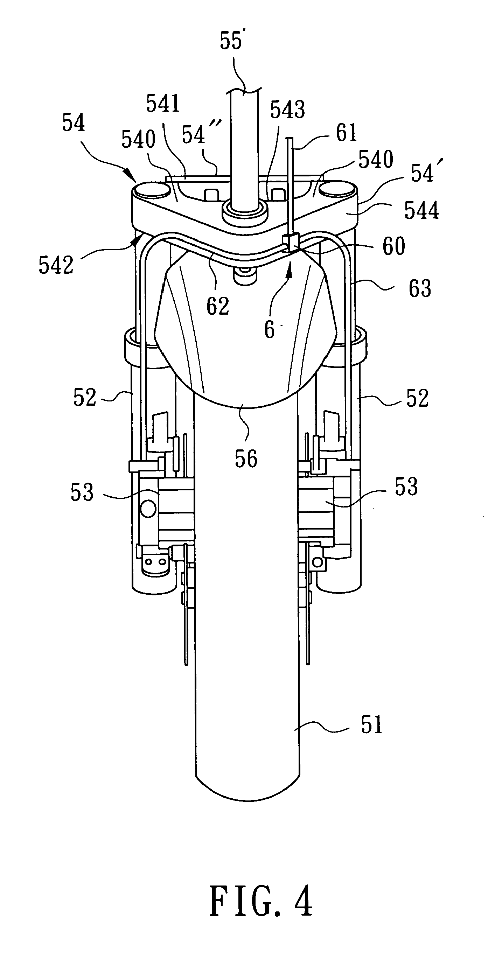

Referring to Figs. 3 and 4, the first preferred embodiment of a front frame assembly 5 for a motorcycle according to this invention includes a front wheel 51, two shock absorbers 52 flanking the front wheel 51, a handle unit, a braking unit, and a brake oil tube device. The handle unit includes a bridge 54 having two opposite lateral sides connected respectively to upper ends of the shock absorbers 52, and opposite front and rear sides 541, 542, and a grip member 55 disposed above and connected fixedly to the bridge 54 and having opposite left and right end portions. A fender 56 is disposed between the front wheel 51 and the bridge 54.

The bridge 54 includes a V-shaped rod 54' and an upright plate 54" disposed in front of and connected fixedly to the rod 54' . The rod 54' includes a pair of left and right rod portions 540 each having opposite front and rear sides 543, 544. The left and right rod portions 540 interconnect fixedly at rear ends thereof, and are connected respectively to the shock absorbers 52 at front ends thereof in a known manner. The rear sides 544 of the left and right rod portions 540 constitute the rear side 542 of the bridge 54 such that the rear side 542 of the bridge 54 is V-shaped.

The braking unit includes a brake controller 57 disposed on the right end portion of the grip member 55, and two disk brakes 53 disposed respectively behind the shock absorbers 52 and controlled by the brake controller 57.

The brake oil tube device includes a three-way connector 60, and first, second, and third oil tubes 61, 62, 63. The three-way connector 60 is attached to the rear side 542 of the bridge 54. In this embodiment, the three-way connector 60 is formed integrally with a rear end portion of the rear side 544 of the right rod portion 540. The first oil tube 61 interconnects the brake controller 57 and the three-way connector 60. Alternatively, the three-way connector 60 may be disposed on a rear end portion of the rear side 544 of the left rod portion 540 or a juncture between the rear sides 544 of the left and right rod portions 540. The second oil tube 62 interconnects the three-way connector 60 and one of the disk brakes 53. The third oil tube 63 interconnects the three-way connector 60 and the other one of the disk brakes 53. As such, the first oil tube 61 is in fluid communication with the second and third oil tubes 62, 63 via the three-way connector 60.

Upon actuation of the brake controller 57, brake oil can be forced from the first oil tube 61 into the second and third oil tubes 62, 63 and, thus, the disk brakes 53 so as to stop the front wheel 51.

Because the three-way connector 60 is disposed on the rear side 542 of the bridge 54, the first, second, and third oil tubes 61, 62, 63 can be installed easily. Furthermore, the first, second, and third oil tubes 61, 62, 63 can be shortened significantly. This reduces the manufacturing cost of the front frame assembly 5.

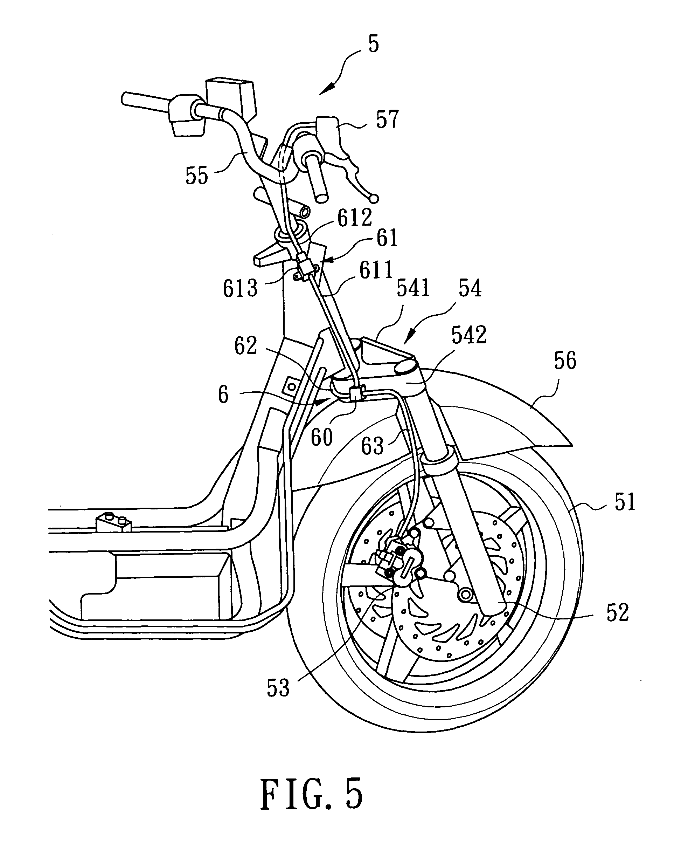

Fig. 5 shows the preferred embodiment of a front frame assembly 5 for a motorcycle according to this invention, which has a modified first oil tube 61. The modified first oil tube 61 includes a lower tube portion 611, an upper tube portion 612, and an antilock braking system 613 disposed between and interconnecting the upper and lower tube portions 612, 611.

## Claims

1. A front frame assembly (5) for a motorcycle including:
a front wheel (51);
two shock absorbers (52) flanking the front wheel (51) ;
a handle unit including a bridge (54) and a grip member (55) disposed above and connected fixedly to the bridge (54), the bridge (54) having two opposite lateral sides connected respectively to the shock absorbers (52), and opposite front and rear sides (541, 542);
a braking unit including a brake controller (57) disposed on the grip member (55), and two disk brakes (53) disposed respectively behind the shock absorbers (52) and controlled by the brake controller (57); and
a brake oil tube device including a three-way connector (60) disposed fixedly on the bridge (54), a first oil tube (61) interconnecting the brake controller (57) and the three-way connector (60), a second oil tube (62) interconnecting the three-way connector (60) and one of the disk brakes (53), and a third oil tube (63) interconnecting the three-way connector (60) and the other one of the disk brakes (53);
**characterized by** the three-way connector (60) being attached to the rear side (542) of the bridge (54).

2. The side frame assembly (2) as claimed in Claim 1, **characterized in that** the bridge (54) includes a V-shaped rod (54') and an upright plate (54") disposed in front of and connected fixedly to the rod (54'), the three-way connector (60) being formed integrally with the rod (54').

3. The side frame assembly (2) as claimed in Claim 1, **characterized in that** the bridge (54) includes a V-shaped rod (54') and an upright plate (54"), the rod (54') including a pair of left and right rod portions (540) each having opposite front and rear ends and opposite front and rear sides (543, 544), the left and right rod portions (540) interconnecting fixedly at the rear ends thereof and connected respectively to the shock absorbers (52) at the front ends thereof, the rear sides (544) of the left and right rod portions (540) constituting the rear side (542) of the bridge (54) such that the rear side (542) of the bridge (54) is V-shaped.

4. The side frame assembly (2) as claimed in Claim 3, further **characterized in that** the grip member (55) has opposite left and right end portions, the brake controller (57) being disposed on the right end portion of the grip member (55), the three-way connector (60) being disposed on a rear end portion of the rear side (544) of the right rod portion (540).

5. The side frame assembly (2) as claimed in Claim 1, **characterized in that** the first oil tube (61) includes an antilock braking system (613).

6. The side frame assembly (2) as claimed in Claim 5, further **characterized in that** the first oil tube (61) further includes a lower tube portion (611) and an upper tube portion (612), the antilock braking system (613) being disposed between and interconnecting the upper and lower tube portions (612, 611).
